# EUROPEAN PATENT APPLICATION

(11) **EP 4 624 987 A1**
(43) Date of publication of application: **01.10.2025**
(21) Application number: 23894482.1
(22) Date of filing: 15.11.2023
(51) Int. Cl.: G01S 7/497, G01S 17/42, G02B 26/10

(54) **RANGING DEVICE**

(30) Priority: 24.11.2022 JP 2022187502
(71) Applicant: DENSO CORPORATION, Kariya-city, Aichi 448-8661 (JP)
(72) Inventor: FUJIBAYASHI, Kenta, Kariya-city, Aichi 4488661 (JP); NAKANISHI, Daisuke, Kariya-city, Aichi 4488661 (JP)
(74) Representative: Kuhnen & Wacker Patent- und Rechtsanwaltsbüro PartG mbB
(86) International application number: PCT/JP2023/041022
(87) International publication number: WO 2024/111473

(57) **Abstract**

A ranging device includes a scan unit (20), an encoder (40), and a control unit (50). The scan unit includes a mirror (21) configured to reflect a transmission wave, and an actuator (30) configured to drive the mirror to oscillate such that the transmission wave scans a scanning range. The encoder is configured to output an angle signal according to a rotation of the mirror. The control unit includes a position calculation unit (51), a drive control unit (53), and an abnormality diagnosis unit (55). The position calculation unit is configured to calculate a position of an object that reflects the transmission wave in the scanning range. The drive control unit is configured to control the actuator. The abnormality diagnosis unit is configured to perform an abnormality diagnosis regarding an operational state of the scan unit based on a signal output by the encoder.

## Description

### CROSS REFERENCE TO RELATED APPLICATIONS

This application is based on and incorporates herein by reference Japanese Patent Application No. 2022-187502 filed on November 24, 2022, the disclosure of which is incorporated herein by reference.

### TECHNICAL FIELD

The present disclosure relates to a ranging device.

### BACKGROUND

Ranging devices are known that detect the distance to an object by emitting a transmission wave and detecting a reflected wave of the transmission wave from the object. The ranging device is equipped with a scan unit that changes the emitting direction of the transmission wave. The scan unit in Patent Document 1 includes a mirror that is driven to oscillate.

### PRIOR ART LITERATURE

### PATENT LITERATURE

Patent Document 1: JP 2021-081419 A

### SUMMARY

In Patent Document 1, the rotational position of the mirror is controlled by detecting the position of the mirror using an incremental encoder. However, Patent Document 1 does not mention details regarding detection of an abnormality in the scan unit. It is an objective of the present disclosure to provide a ranging device that detects an abnormality in an operational state of a scan unit.

A ranging device of the present disclosure includes a scan unit, an encoder, and a control unit. The scan unit has a mirror that reflects a transmission wave, and an actuator that drives the mirror to oscillate such that the transmission wave scans a scanning range. The encoder outputs an angle signal according to a rotational position of the mirror.

The control unit includes a position calculation unit, a drive control unit, and an abnormality determination unit. The position calculation unit calculates a position of an object that reflects the transmission wave in the scanning range. The drive control unit controls a drive of the actuator. The abnormality diagnosis unit performs abnormality diagnosis regarding an operational state of the scan unit based on a signal output by the encoder. This makes it possible to properly detect abnormalities in the operational state of the scan unit.

### BRIEF DESCRIPTION OF THE DRAWINGS

The above and other objectives, features and advantages of the present disclosure will become more apparent from the following detailed description with reference to the accompanying drawings. In the drawings:
FIG. 1 is a block diagram showing the configuration of a ranging device according to one embodiment;
FIG. 2 is a schematic top view of the ranging device according to one embodiment;
FIG. 3 is a perspective view of the ranging device of one embodiment;
FIG. 4 is a schematic cross-sectional view of an oscillation motor according to one embodiment taken along a plane perpendicular to an oscillation axis;
FIG. 5 is an exploded perspective view showing an encoder according to one embodiment;
FIG. 6 is a schematic diagram showing an operation of the mirror according to one embodiment;
FIG. 7 is a diagram illustrating A phase, B phase, and Z phase signals according to one embodiment;
FIG. 8 is a flowchart showing scanning control according to one embodiment;
FIG. 9 is a time chart showing the scanning control according to one embodiment;
FIG. 10 is a time chart showing amplitude abnormality according to one embodiment;
FIG. 11 is a flow chart showing an amplitude abnormality diagnosis process according to one embodiment;
FIG. 12 is a time chart showing an angular velocity abnormality according to one embodiment;
FIG. 13 is a flow chart showing an angular velocity abnormality process according to one embodiment;
FIG. 14 is a time chart showing an angle signal abnormality according to one embodiment;
FIG. 15 is a flow chart showing an angle signal abnormality diagnosis process according to one embodiment;
FIG. 16 is a time chart showing a reference signal abnormality according to one embodiment;
FIG. 17 is a flow chart showing a reference signal abnormality diagnosis process according to one embodiment;
FIG. 18A is a time chart showing the mirror angle and angular velocity when the ranging cycle is relatively long;
FIG. 18B is a time chart showing the mirror angle and angular velocity when the ranging cycle is relatively short;
FIG. 19A is a time chart showing an angle signal when the ranging cycle is relatively long;
FIG. 19B is a time chart showing an angle signal when the ranging cycle is relatively short;
FIG. 20A is a time chart showing a mirror angle when the ranging range is relatively wide;
FIG. 20B is a time chart showing the mirror angle when the ranging range is relatively narrow;
FIG. 21A is a time chart showing the angular velocity when the ranging range is relatively wide;
FIG. 21B is a time chart showing the angular velocity when the ranging range is relatively narrow;
FIG. 22A is a time chart showing an angle signal when the ranging range is relatively wide;
FIG. 22B is a time chart showing an angle signal when the ranging range is relatively narrow;
FIG. 23A is a time chart showing the mirror angle and angular velocity when ranging is performed during forward rotation; and
FIG. 23B is a time chart showing the mirror angle and angular velocity when ranging is performed during reverse rotation.

### DESCRIPTION OF EMBODIMENTS

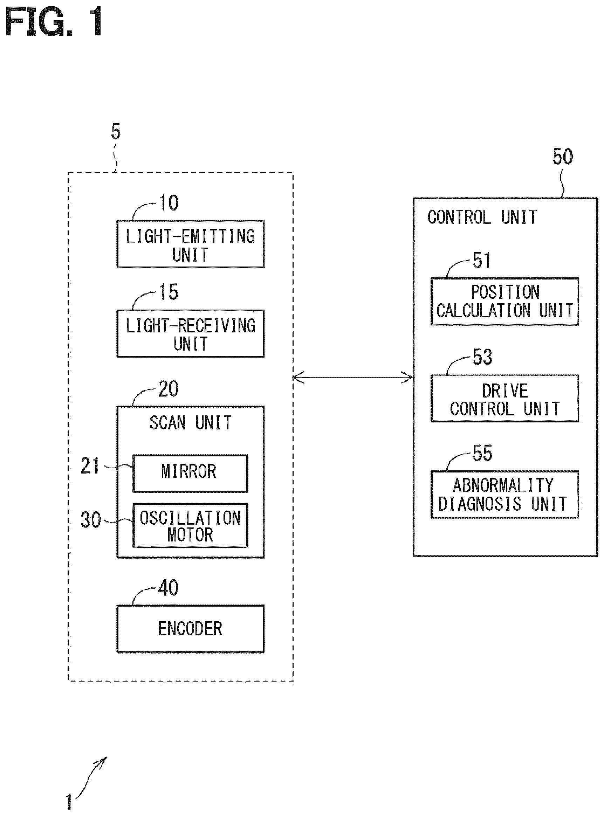

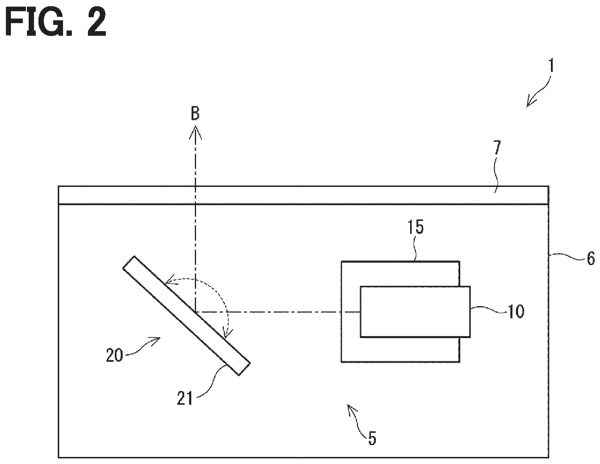

(First Embodiment) Hereinafter, a ranging device of the present disclosure will be described with reference to the drawings. One embodiment is shown in FIGS. 1 to 23B. As shown in FIGS. 1 and 2, the ranging device 1 is a Light Detection and Ranging (LiDAR) device that measures the distance to an object by emitting light and detecting reflected light from the object. The ranging device 1 is mounted on, for example, a vehicle and is used to detect an object in front of the vehicle.

The ranging device 1 includes a measurement unit 5 and a control unit 50. The measurement unit 5 includes a light emitting unit 10, a light receiving unit 15, a scan unit 20, and an encoder 40. As shown in FIG. 2, the measurement unit 5 is housed in a housing 6. The housing 6 is made of, for example, resin and has a rectangular parallelepiped shape. The housing 6 has one open side. The housing 6 is equipped with a transparent optical window 7 through which light passes to entirely cover the open side.

In the housing 6, the light emitting unit 10 is housed in an upper portion, and the light receiving unit 15 is housed in a lower portion. The light emitting unit 10 outputs a light beam B intermittently. The light receiving unit 15 receives reflected light R from an object which is irradiated with the light beam B, and converts the reflected light R into an electrical signal.

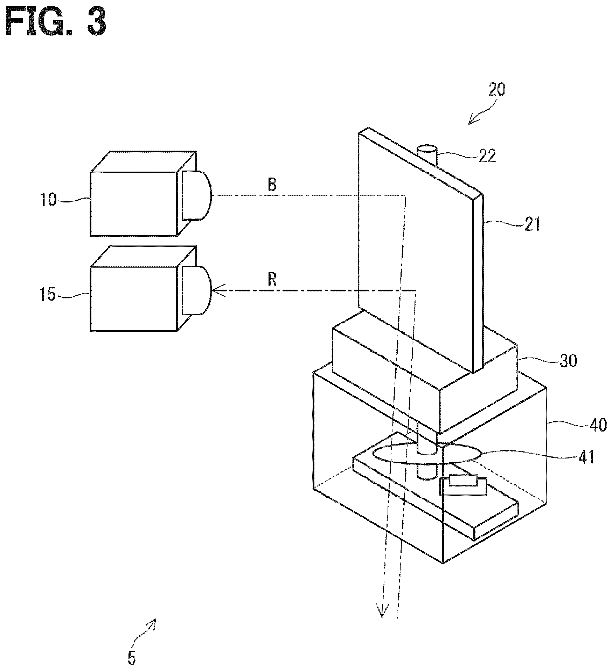

The scan unit 20 includes a mirror 21 that is driven to oscillate, and an oscillation motor 30 (see FIG. 3) that drives the mirror 21 to oscillate. The scan unit 20 reflects the light beam B output from the light emitting unit 10 with the mirror 21 and emits the light beam B outward through the optical window 7 in a direction corresponding to the rotational position of the mirror 21, thereby scanning a predetermined scanning range with the light beam B.

As shown in FIG. 3, the mirror 21 is a flat plate member having a reflective surface that reflects light. The mirror 21 is attached to an oscillation shaft 22 to move integrally with the oscillation shaft 22. The oscillation shaft 22 extends in the vertical direction, and the surface of the mirror 21 opposite to the reflective surface is fixed to the oscillation shaft 22 such that the oscillation shaft 22 is aligned along the vertical center line of the surface.

The oscillation motor 30 is disposed vertically below the mirror 21, and drives the oscillation shaft 22 to oscillate the mirror 21 around the oscillation shaft 22. As a result, the light beam B output from the light emitting unit 10 scans a predetermined scanning range.

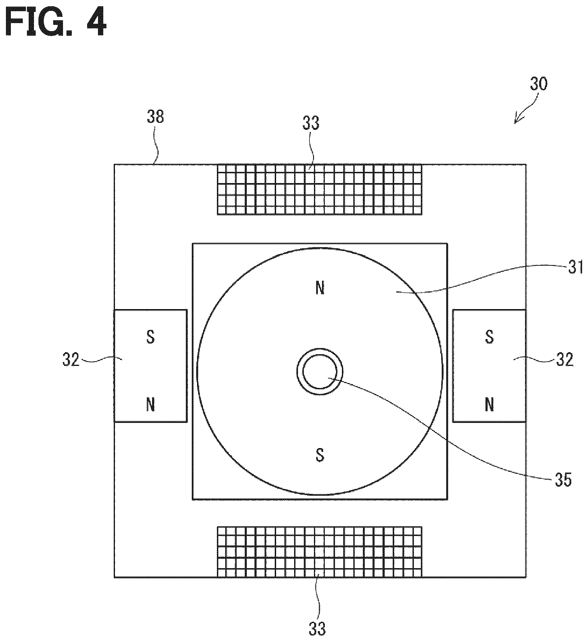

As shown in FIG. 4, the oscillation motor 30 has a rotary magnet 31, a pair of fixed magnets 32, an electromagnetic coil 33, and a rotary shaft 35. The oscillation motor 30 is housed in a case 38. The rotary magnet 31 is a disk-shaped magnet defining a shaft hole at its center. A rotary shaft 35 is fixed in the shaft hole of the rotary magnet 31 by press fitting or the like. The rotary shaft 35 is rotatably supported by the case 38. The rotary magnet 31 is disposed so that an arrangement direction of opposite poles is perpendicular to the axial direction.

The pair of fixed magnets 32 is fixed to the case 38 so that the arrangement direction of opposite poles is perpendicular to the axial direction of the rotary shaft 35 (i.e., the up down direction on the paper surface of FIG. 4). In the example of FIG. 4, the fixed magnets 32 are arranged with the south poles on the upper side of the paper surface and the north poles on the lower side of the paper surface.

The magnetic field of the rotary magnet 31 and the magnetic field of the fixed magnets 32 interact with each other, thereby keeping the rotary magnet 31 at a stationary position where magnetic field of the rotary magnet 31 is opposite to the magnetic field of the fixed magnets 32. FIG. 4 shows a state in which the rotary magnet 31 is stationary at the stationary position. In the example of FIG. 4, the upper side of the rotary magnet 31 on the paper surface is the north pole, and the lower side is the south pole. In other words, the rotary magnet 31 is biased by the magnetic force of the fixed magnets 32 to return to the stationary position.

An electromagnetic coil 33 is wound around the outer periphery of the case 38 in the up down direction on the paper surface of FIG. 4. When energized, the electromagnetic coil 33 generates magnetic field lines having a vertical component to the magnetic field lines generated between the rotary magnet 31 and the fixed magnets 32. The electromagnetic coil 33 is connected to an alternating current power source or a pulse oscillation power source.

When no current is applied, the rotary magnet 31 remains stationary at the stationary position shown in FIG. 4. When the electromagnetic coil 33 is energized, magnetic field lines are generated that have a vertical component to the magnetic field lines generated between the rotary magnet 31 and the fixed magnets 32, causing the rotary magnet 31 to oscillate around the stationary position.

The term "oscillation" refers to a motion in which a rotational motion is periodically repeated in forward and reverse directions within a predetermined angle range less than 360°. The rotary magnet 31 rotates forward from the stationary position to a predetermined angle, switches to reverse rotation, returns to the stationary position, and then rotates reversely from the stationary position to the predetermined angle. Thereafter, the rotary magnet 31 switches back to forward rotation and returns to the stationary position. Then, the above movement is repeated. In this embodiment, the angle range of forward rotation from the stationary position is equal to the angle range of reverse rotation. However, the angle range of the forward rotation direction and the angle range of the reverse rotation direction may be different. When the electromagnetic coil 33 is de-energized, the rotary magnet 31 returns to the stationary position and stops.

The repulsive force between the rotary magnet 31 and the fixed magnets 32 increases as the distance from the stationary position increases. Thus, the greater the rotation angle from the stationary position, the more torque is required to overcome the reaction force and maintain a fixed position.

In this embodiment, the clockwise rotation in FIG. 4 is defined as a forward rotation, and the counterclockwise rotation is defined as a reverse rotation. The rotational direction in FIG. 4 coincides with the rotational direction when the ranging device 1 is mounted on a vehicle and viewed from above in the vertical direction.

The oscillation shaft 22 is arranged to move integrally with the rotary magnet 31. That is, the oscillation shaft 22 is stopped at a stationary position when the oscillation motor 30 is not energized, and oscillates around the stationary position when the oscillation motor 30 is energized.

The mirror 21 is attached to the oscillation shaft 22 so that, when the oscillation shaft 22 is in the stationary position, the mirror 21 is in a reference position where the mirror 21 can reflect the light beam B toward approximately the center of the scanning range. The mirror 21 oscillates within a predetermined angle range including the reference position in accordance with the rotation of the oscillation shaft 22. When the oscillating motor 30 is de-energized, the oscillation shaft returns to the stationary position, and the mirror 21 returns to the reference position and stops. That is, the mirror 21 is biased in a direction returning to the reference position by the magnetic force of the fixed magnets 32.

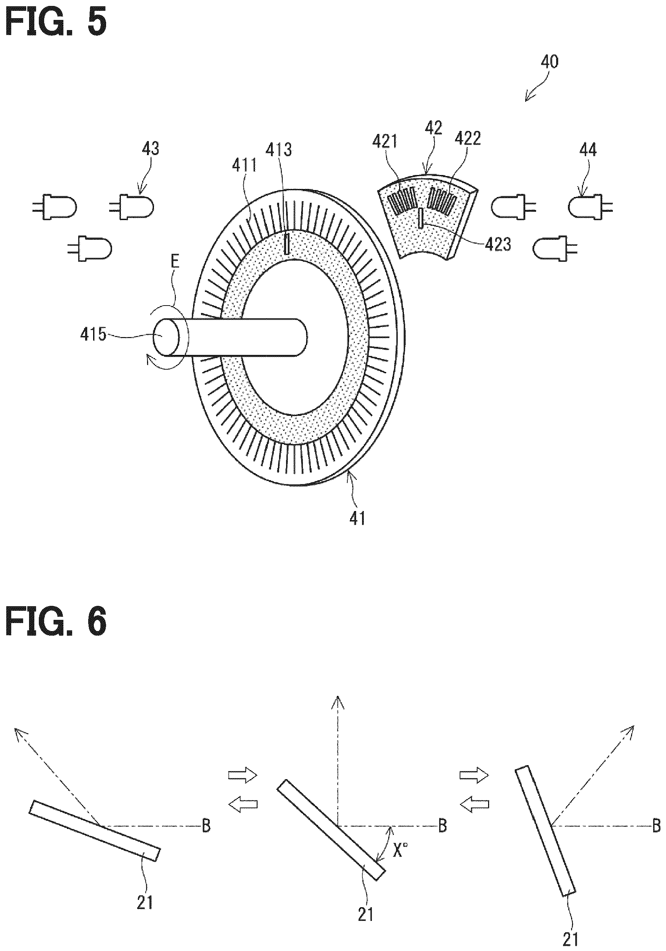

The encoder 40 detects the rotation angle of the mirror 21. The encoder 40 in this embodiment is a three-phase output type incremental encoder as shown in FIG. 5. The encoder 40 includes a rotary disk 41, a fixed slit 42, light emitting elements 43, and light receiving elements 44.

The rotary disk 41 has a circular disk shape. The rotary disk 41 defines multiple outer circumferential slits 411 on the outer circumference of the rotary disk 41, and an origin slit 413 that is formed on the inner circumferential side of the outer circumferential slits 411. The origin slit 413 indicates the origin position. The rotary shaft 415 of the rotary disk 41 is fixed to the oscillation shaft 22. As a result, the rotary disk 41 rotates integrally with the oscillation shaft 22 as indicated by the arrow E.

The fixed slit 42 defines three types of slits, A-phase slits 421, B-phase slits 422, and a Z-phase slit 423, to make the output signal have multiple phases. The A-phase slits 421 and the B-phase slits 422 are formed at positions facing the outer circumferential slits 411 of the rotary disk 41 so that the phase difference between the A-phase output signal and the B-phase output signal is 90°. The Z-phase slit 423 is formed at a position facing the origin slit 413.

The light emitting elements 43 may be light emitting diodes, and projects light toward the rotary disk 41. The light emitting elements 43 and the light receiving elements 44 are disposed to face each other with the rotary disk 41 and the fixed slit 42 interposed therebetween. The light receiving elements 44 may be phototransistors, which receive light that has passed through the slits of the rotary disk 41 and the fixed slit 42. The light receiving elements 44 output A-phase, B-phase and Z-phase pulse signals. The encoder 40 detects edges of the A-phase signal and the B-phase signal and increments a counter. When a rising edge of the Z phase is detected, the counter is reset.

FIG. 6 is a schematic diagram showing a cross section of the mirror 21 cut along a plane perpendicular to the oscillation shaft 22. The central portion on the paper of FIG. 6 shows a state where the mirror 21 is in the reference position. The direction in which the mirror 21 rotates from the left state to the right state on the paper corresponds to the forward direction, and the direction in which the mirror 21 rotates from the right state to the left state on the paper corresponds to the reverse direction.

The encoder 40 is installed on the oscillation motor 30 such that a Z-phase signal is output when the mirror 21 is at the reference position. That is, the rotary shaft 415 of the rotary disk 41 is fixed to the oscillation shaft 22 so that a Z-phase signal is output when the oscillation shaft 22 is at the stationary position. When the angle between the mirror 21 and the light beam B output from the light emitting unit 10 in the reference position is defined as X° (45° in this embodiment), a Z-phase signal is output at X°.

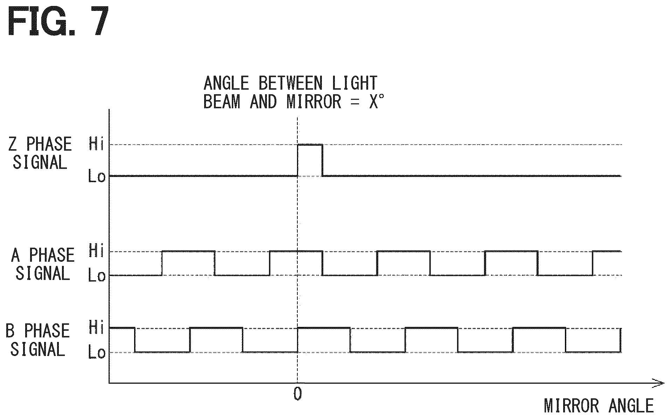

As shown in FIG. 7, when the mirror 21 rotates forward, a B-phase signal is output with a delay of 90° from the output of the A-phase signal. When the mirror 21 rotates reversely, the A-phase signal is output with a delay of 90° from the output of the B-phase signal. This allows the encoder 40 to detect the mirror angle θ, which is the rotational angle of the mirror 21 with respect to the reference position, based on the waveforms of the A-phase signal and the B-phase signal after detection of the Z-phase signal.

As shown in FIG. 1, the control unit 50 is mainly composed of a microcontroller and the like, and internally includes a CPU, a ROM, a RAM, an I/O, a bus line for connecting these components, and the like (not shown in figures). Each processing executed by the control unit 50 may be software processing which is implemented by causing the CPU to execute a program stored in a memory device such as a ROM (i.e., computer-readable non-transitory tangible storage medium) or may be hardware processing which is implemented by a special purpose electronic circuit.

The control unit 50 includes, as functional blocks, a position calculation unit 51, a drive control unit 53, and an abnormality diagnosis unit 55. The position calculation unit 51 calculates the distance to the object that has reflected the light beam B. Specifically, the position calculation unit 51 identifies the light receiving timing at which the reflected light is received based on the waveform of the electrical signal output from the light receiving unit 15. Then, the position calculation unit 51 calculates the distance to the object based on the difference between the light receiving timing and the timing at which the light beam was emitted. Additionally, the position calculation unit 51 can calculate position information such as the direction in which the object that has reflected the light beam is located. The drive control unit 53 controls the drive of the oscillation motor 30 that drives the mirror 21. The abnormality diagnosis unit 55 determines whether there is an abnormality in the scan unit 20. If an abnormality is detected in the scan unit 20, for example, ranging is stopped.

The drive control unit 53 performs alignment control prior to scanning control. In the alignment control, the oscillation motor 30 is driven at a predetermined voltage by open loop control that does not use detection values of the encoder 40. With the alignment control, the origin is searched, and the position where the Z-phase signal is detected is set as the mirror angle θ = 0°. Additionally, the angle difference from the mirror position when no current is applied is stored as a correction value. Since the oscillation motor 30 is biased in the direction returning to the reference position, the oscillation range in the alignment control does not need to be the same as that in the scanning control, and a relatively narrow range is sufficient.

After the alignment control, the drive control unit 53 performs the scanning control to drive the oscillation motor 30 to cause the mirror 21 to oscillate within a predetermined angle range from the reference position for light beam scanning. The scanning control is a feedback control based on detection values of the encoder 40.

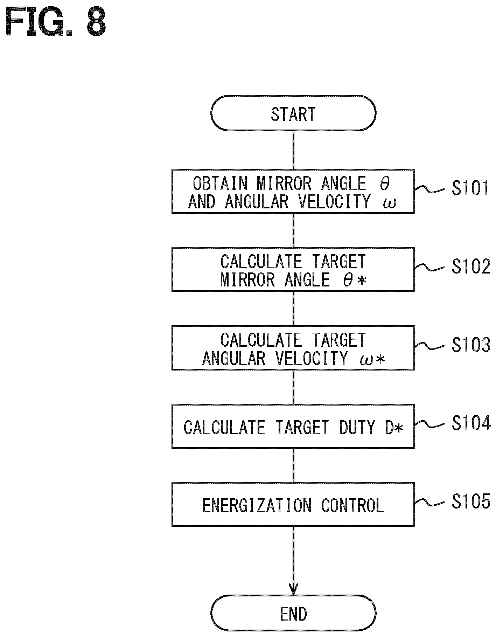

The scanning control of the present embodiment will be described with reference to the flowchart of FIG. 8. The process is executed by the control unit 50 at a predetermined cycle after the alignment control. Hereinafter, "step" may be simply referred to as a symbol "S".

In S101, the control unit 50 obtains the current mirror angle θ and angular velocity ω based on detection values of the encoder 40. In S102, the drive control unit 53 calculates a target mirror angle θ* based on the elapsed time from the start of the scanning control. In this embodiment, the target mirror angle θ* is set according to time so that the mirror 21 oscillates at a constant cycle.

In S103, the drive control unit 53 calculates a target angular velocity ω* from the difference Δθ between the target mirror angle θ* and the current mirror angle θ. In S104, the drive control unit 53 calculates a target duty ratio D* in PWM control from the difference Δω between the target angular velocity ω* and the current angular velocity ω. In S105, the drive control unit 53 energizes the oscillation motor 30 at the target duty ratio D*.

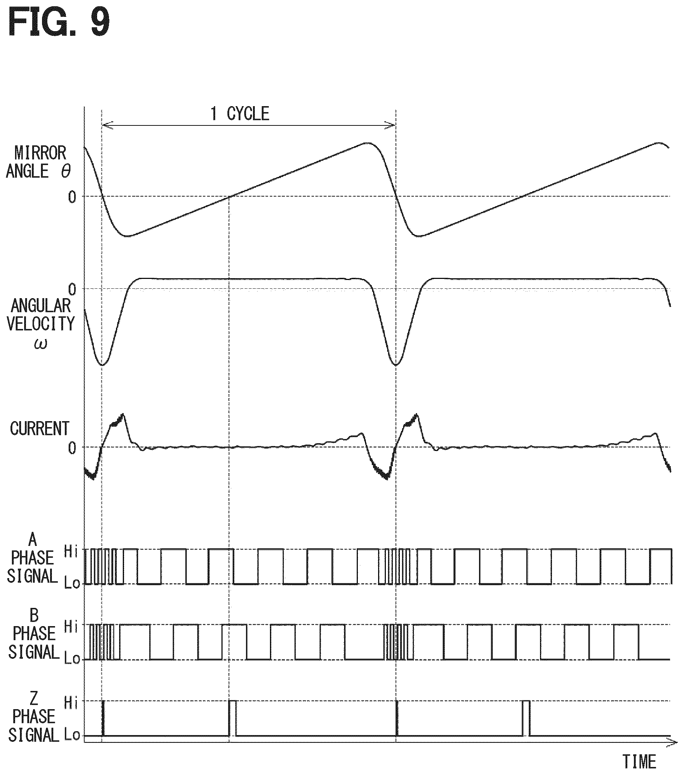

The scanning control of the present embodiment will be described based on the time chart of FIG. 9. In FIG. 9, the horizontal axis represents a common time axis, and the mirror angle θ, the angular velocity ω, the motor current, the A-phase signal, the B-phase signal, and the Z-phase signal are shown from the top of the chart.

The mirror angle θ is calculated by detecting edges of the A-phase signals and the B-phase signals and incrementing the counter, with the mirror angle θ being defined to be 0° when the mirror 21 is at the reference position. Additionally, detection deviations can be reset by resetting the counter upon edge detection of the Z-phase signal. The angular velocity ω is calculated through the time differentiation of the mirror angle θ. One cycle in the scanning control is defined as a period from when a Z-phase pulse is detected during reverse rotation until the next Z-phase pulse is detected during reverse rotation. The one cycle of the scanning control is appropriately referred to as a "ranging cycle".

In the scanning control, the forward rotation in which the mirror 21 rotates at a constant speed from one side of the reference position to the other side and the reverse rotation in which the mirror 21 returns from the other side to the one side are alternately performed, thereby causing the mirror 21 to oscillate. The period of the reverse rotation is relatively short compared to the period of the forward rotation. Additionally, ranging is performed using LiDAR during the forward rotation period when the mirror 21 is rotating at a constant speed.

However, if there is an abnormality in the angular velocity ω or the detection value of the encoder 40, the accuracy of ranging to the object decreases, or normal ranging is impossible. Thus, in this embodiment, the abnormality diagnosis unit 55 performs abnormality determination based on a signal output by the encoder 40.

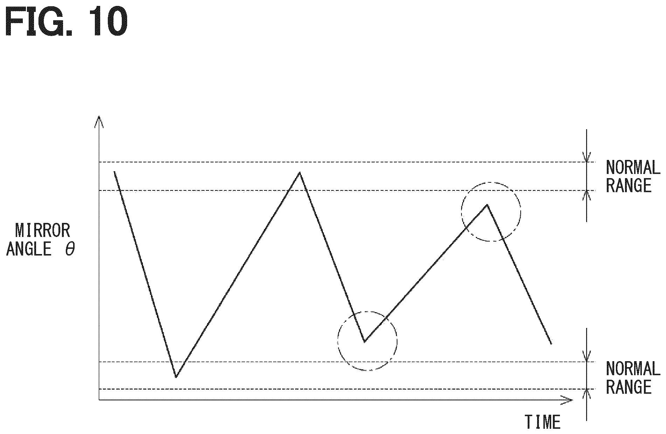

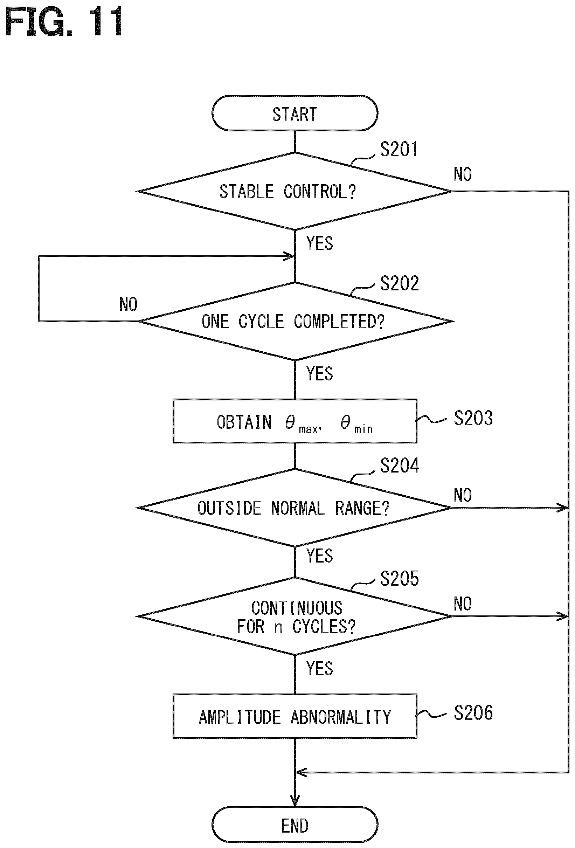

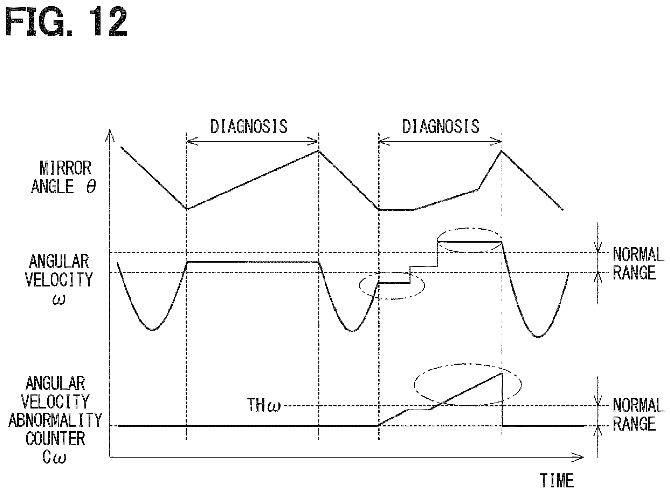

An amplitude abnormality diagnosis of the present disclosure will be described with reference to FIGS. 10 and 11. FIG. 10 is a simplified time chart, and reference lines are omitted as appropriate. Abnormal behaviors are indicated by dot-dash circles. The same applies to time charts such as FIG. 12 for explaining various abnormality diagnoses, which will be described later.

As shown in FIG. 10, when no amplitude abnormality exist, the rotational direction is reversed when the mirror angle θ falls within a normal range. On the other hand, when an amplitude abnormality exists, as indicated by the dashed-dotted circles, the rotational direction is reversed before the mirror angle θ reaches the normal range. In this situation, the amplitude of the mirror angle θ is narrower than normal. The amplitude of the mirror angle θ corresponds to the field of view of the LiDAR. When the amplitude of the mirror angle θ is small, it can be said that the field of view in the scanning control is narrow. If a LiDAR field of view defect occurs, there is a possibility that obstacles will be overlooked. Thus, this is determined to be an abnormality.

The amplitude abnormality diagnosis process will be described with reference to the flowchart of FIG. 11. In S201, the abnormality diagnosis unit 55 determines whether the ranging control is stable. For example, when the origin position and the correction value are reset at the start of operation, the angle cannot be controlled to the desired angle, so that abnormality diagnosis is not performed. Here, a positive determination is made when the origin has been searched and correction processing using the correction value can be performed. When it is determined that the ranging control is not stable (S201: NO), the processes from S202 onwards are skipped.

In S202, the abnormality diagnosis unit 55 determines whether one cycle of the scanning control has been completed. When it is determined that one cycle has not been completed (S202: NO), the determination process is repeated. When it is determined that one cycle has been completed (S202: YES), the process proceeds to S203, and the maximum value θₘₐₓ and the minimum value θₘᵢₙ of the mirror angle θ within one cycle are obtained.

In S204, the abnormality diagnosis unit 55 determines whether at least one of the maximum value θₘₐₓ and the minimum value θₘᵢₙ fall outside the normal range. When it is determined that the maximum value θₘₐₓ and the minimum value θₘᵢₙ fall within the normal range (S204: NO), the processes from S205 onwards are skipped. When it is determined that at least one of the maximum value θₘₐₓ and the minimum value θₘᵢₙ falls outside the normal range (S204: YES), the process proceeds to S205.

In S205, the abnormality diagnosis unit 55 determines whether a state in which at least one of the maximum value θₘₐₓ and the minimum value θₘᵢₙ falls outside the normal range is kept for n consecutive cycles. n can be set to any natural number (e.g., n = 2). The same applies to other embodiments which will be described later. When it is determined that the state in which at least one of the maximum value θₘₐₓ and the minimum value θₘᵢₙ falls outside the normal range is kept for less than n cycles (S205: NO), the process of S206 is skipped. When it is determined that the state in which at least one of the maximum value θₘₐₓ and the minimum value θₘᵢₙ falls outside the normal range is kept for n consecutive cycles (S205: YES), the process proceeds to S206, where it is detected as an amplitude abnormality.

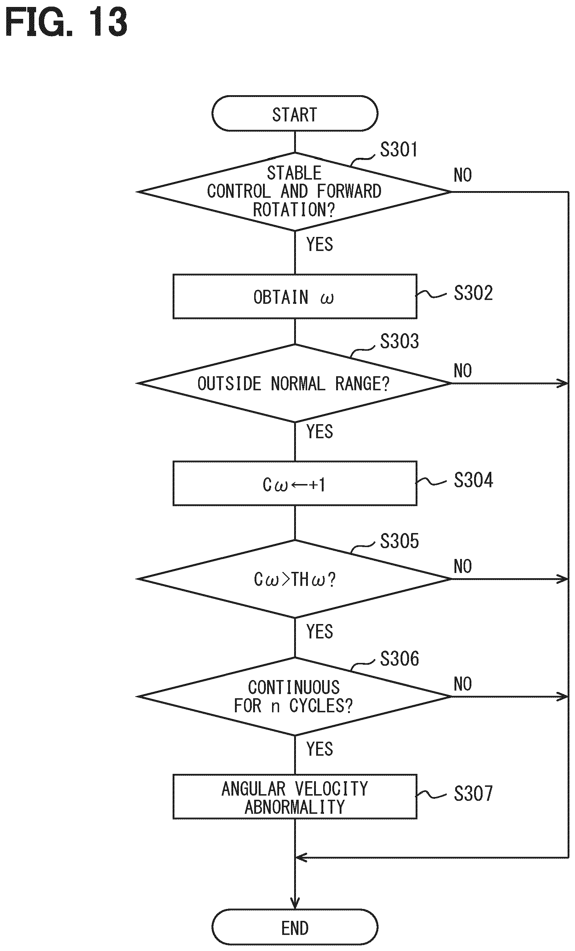

The angular velocity abnormality diagnosis of the present embodiment will be described with reference to FIGS. 12 and 13. In FIG. 12, the horizontal axis represents a common time axis, and the mirror angle θ, the angular velocity ω, and the angular velocity abnormality counter Cω are shown from the top of the chart.

As shown in FIG. 12, feedback control is performed during normal rotation so that the angular velocity ω is constant for LiDAR measurement. If an angular velocity abnormality occurs in which the angular velocity ω during forward rotation falls outside the normal range, the angular accuracy of the LiDAR decreases. The upper limit of the normal range is determined by the CPU's computing capacity, and the lower limit is determined by the LiDAR measurement cycle. If the angular velocity ω falls outside the normal range, the processing capacity is exceeded, causing visual field loss and cycle delays. Thus, accurate position detection is impossible, and this is determined to be an abnormality.

An angular velocity abnormality diagnosis process of the present embodiment will be described with reference to the flowchart of FIG. 13. In S301, the abnormality diagnosis unit 55 determines whether the ranging control is stable and the forward rotation is performed. If it is determined that the ranging control is not stable or that the reverse rotation is performed (S301: NO), the processes from S302 onwards are skipped. When it is determined that the ranging control is stable and that the forward rotation is performed (S301: YES), an angular velocity abnormality diagnosis is performed. In S302, to which the flow proceeds when a positive determination is made in S301, the current angular velocity ω is obtained.

In S303, the abnormality diagnosis unit 55 determines whether the angular velocity ω falls outside the normal range. If it is determined that the angular velocity ω falls within the normal range (S303: NO), the processes from S304 onwards are skipped. When it is determined that the angular velocity ω falls outside the normal range (S303: YES), the process proceeds to S304, and the angular velocity abnormality counter Cω is incremented. The angular velocity abnormality counter Cω is reset at the end of one cycle.

In S305, the abnormality diagnosis unit 55 determines whether the angular velocity abnormality counter Cω is greater than an abnormality determination threshold value THω. When it is determined that the angular velocity abnormality counter Cω is equal to or less than the abnormality determination threshold value THω (S305: NO), the processes from S306 onwards are skipped. When it is determined that the angular velocity abnormality counter Cω is greater than the abnormality determination threshold THω (S305: YES), the process proceeds to S306.

In S306, the abnormality diagnosis unit 55 determines whether the state in which the angular velocity abnormality counter Cω is greater than the abnormality determination threshold value THω is kept for n consecutive cycles. When it is determined that the state in which the angular velocity abnormality counter Cω is greater than the abnormality determination threshold value THω is kept for less than n cycles (S306: NO), the process of S307 is skipped. When it is determined that the state in which the angular velocity abnormality counter Cω is greater than the abnormality determination threshold value THω is kept for n consecutive cycles (S306: YES), the process proceeds to S307, and the angular velocity abnormality is detected. The number of cycles for detecting abnormality may be the same or different depending on types of the abnormality to be detected.

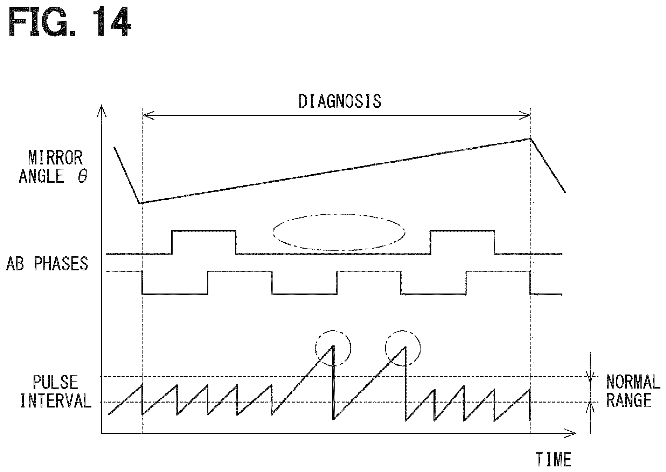

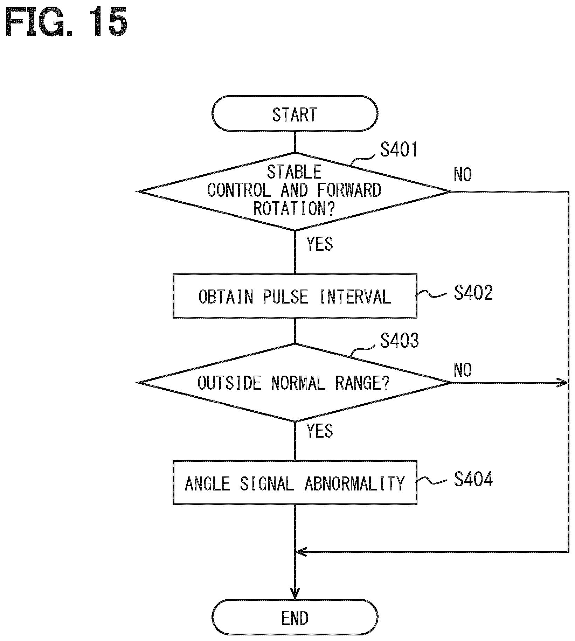

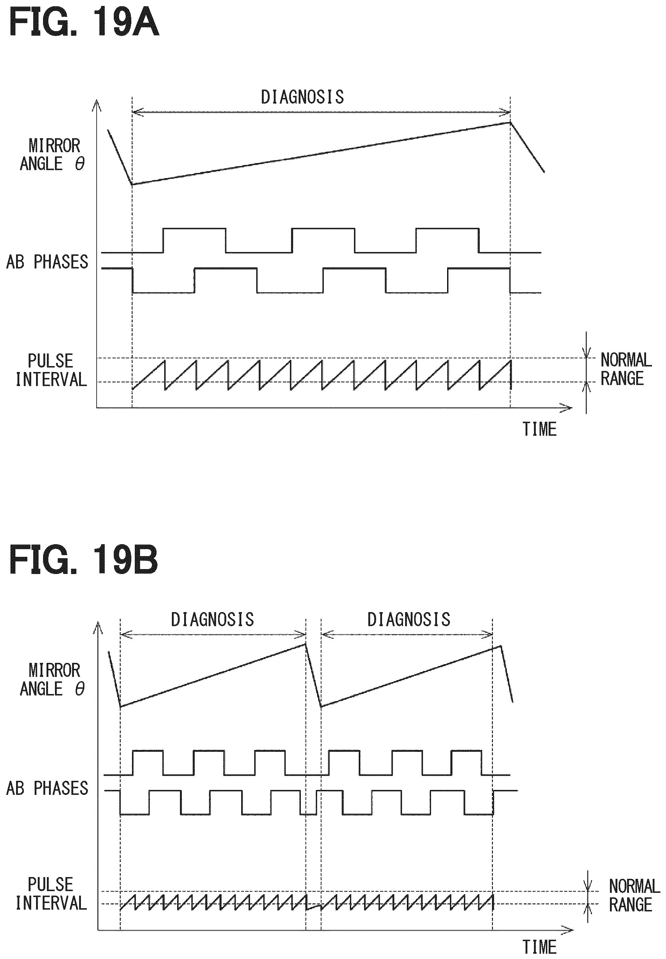

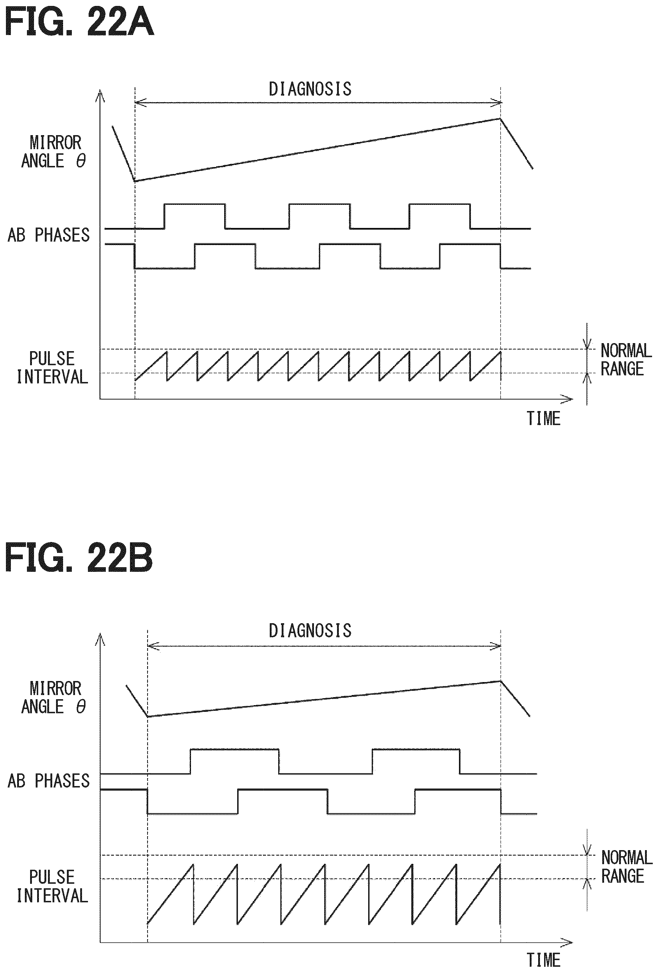

An angle signal abnormality diagnosis will be described with reference to FIGS. 14 and 15. In FIG. 14, the horizontal axis represents a common time axis, and the mirror angle, the A phase signal, the B phase signal, and the pulse interval are shown from the top of the chart. In FIG. 14, the A-phase signal and the B-phase signal are collectively referred to as "AB phases". The same applies to FIGS. 19A, 19B, 22A and 22B described below. The pulse interval is the interval between edges, and is calculated by counting the time from when an edge is detected until the next edge is detected. When an edge is detected, the time count is reset and begins again.

As shown in FIG. 14, as described above, the angular velocity ω is controlled to be constant during the forward rotation for LiDAR measurement. Thus, the pulse detection intervals between the A-phase signal and the B-phase signal, which are angle signals, are approximately constant during the forward rotation under normal conditions. On the other hand, when the pulse interval increases due to pulse loss or noise, the pulse detection interval is disrupted. If the pulse interval is disrupted, the calculated angle will differ from the actual mirror position, making it impossible to detect the position accurately. Thus, this is detected as an abnormality.

An angle signal abnormality diagnosis process will be described with reference to the flowchart of FIG. 15. The process of S401 is the same as the process of S301 in FIG. 13. If a positive determination is made in S401, angle signal abnormality diagnosis is performed. In S402, the abnormality diagnosis unit 55 detects the rising edges and falling edges of the A-phase signal and the B-phase signal, and obtains the pulse interval from the time interval between the edges.

In S403, the abnormality diagnosis unit 55 determines whether the pulse interval falls outside the normal range. When it is determined that the pulse interval falls within the normal range (S403: NO), the process of S404 is skipped. If it is determined that the pulse interval falls outside the normal range (S403: YES), the process proceeds to S404, and this is determined as angle signal abnormality.

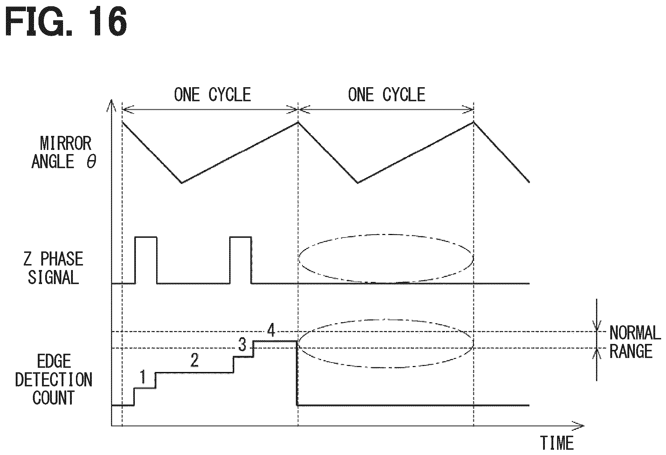

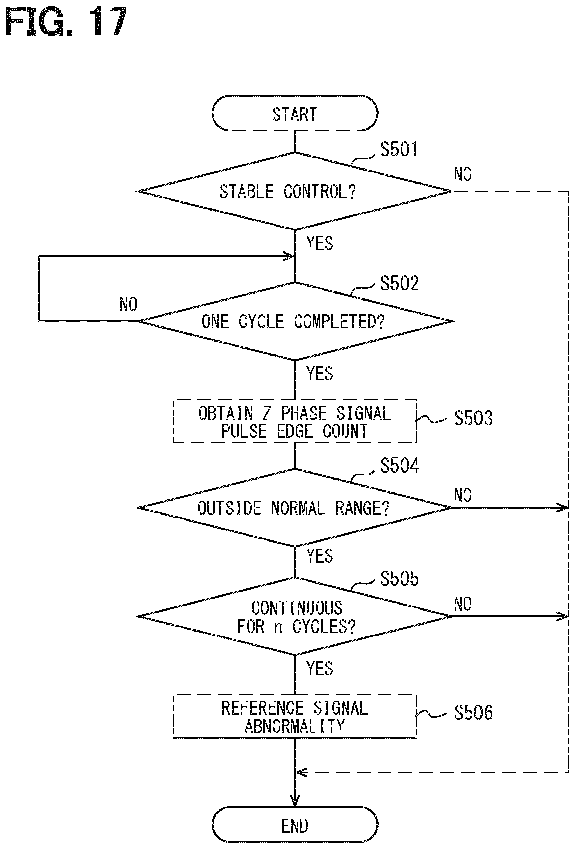

The reference signal abnormality diagnosis will be described with reference to FIGS. 16 and 17. In FIG. 16, the horizontal axis represents a common time axis, and the mirror angle θ, the Z phase signal, and the edge detection number of times are shown from the top of the chart. As shown in FIG. 16, the origin is crossed twice during one cycle of the ranging control. Thus, four edges are detected for the Z-phase signals under normal conditions, including the rising and falling edges. On the other hand, if the number of pulses increases due to pulse loss or noise, the edge detection number of times will be other than four. If the Z phase signal is abnormal, the reference position is shifted and accurate position detection is not possible. Thus, this is determined as abnormal.

A reference signal abnormality diagnosis process of the present embodiment will be described with reference to the flowchart of FIG. 17. Processes of S501, S502 are similar to the processes of S201, S202 in FIG. 11. Additionally, the period of one cycle may be different from that in FIG. 9. For example, as shown in FIG. 16, one cycle is defined as a cycle from the start of reverse rotation to the end of forward rotation to facilitate edge detection of the Z-phase signal.

In S503, the abnormality diagnosis unit 55 obtains the number of pulse edges of the Z phase signals within one cycle. In S504, the abnormality diagnosis unit 55 determines whether the number of pulse edges of the Z phase signals falls outside the normal range. When it is determined that the number of pulse edges of the Z phase signals falls within the normal range (S504: NO), that is, when the number of pulse edges of the Z phase signals is 4, the processes from S505 onwards are skipped. When it is determined that the number of pulse edges of the Z phase signals falls outside the normal range (S504: YES), that is, when the number of pulse edges of the Z phase signal is other than 4, the process proceeds to S505.

In S505, the abnormality diagnosis unit 55 determines whether the number of pulse edges of the Z phase signals falls outside the normal range for n consecutive cycles. When it is determined that the state in which the number of pulse edges of the Z phase signals falls outside the normal range is kept for less than n consecutive cycles (S505: NO), the process of S506 is skipped. When it is determined that the state in which the number of pulse edges of the Z phase signals falls outside the normal range is kept for n consecutive cycles (S506: YES), the process proceeds to S506, and this situation is detected as a reference signal abnormality.

Here, the operation method of the ranging device 1 may be changed depending on the mobility to which the ranging device 1 is applied. In this embodiment, it is possible to determine an abnormality according to the mobility to which the ranging device 1 is applied by changing the normal range.

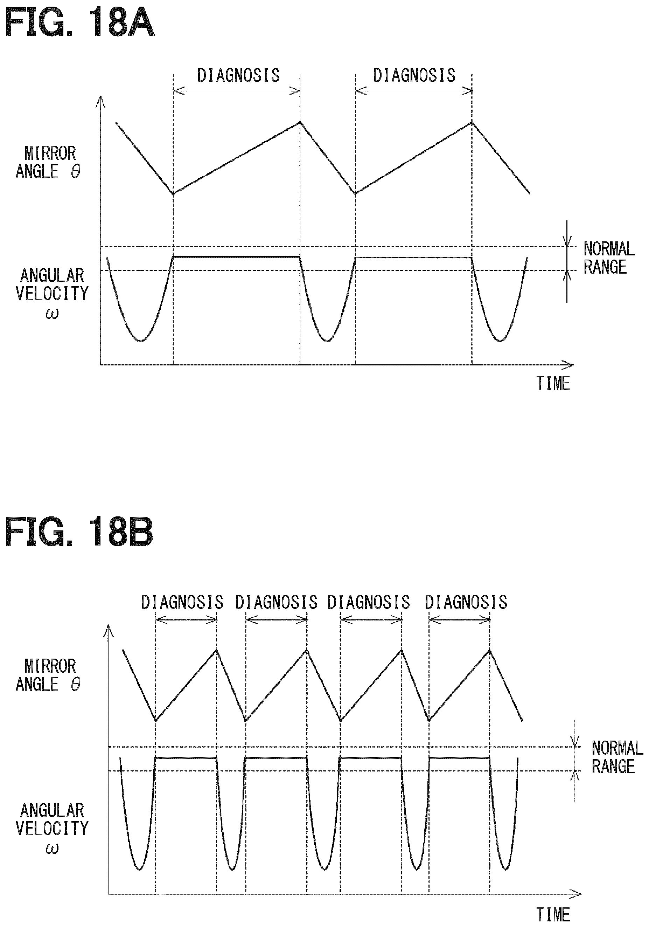

FIG. 18A shows a case where the ranging cycle is relatively long, and FIG. 18B shows a case where the ranging cycle is relatively short. When the ranging cycle is short, the angular velocity ω is larger than when the ranging cycle is relatively long. In such a case, it is possible to determine an abnormality by shifting the normal range.

FIG. 19A shows a case where the ranging cycle is relatively long, and FIG. 19B shows a case where the ranging cycle is relatively short. When the ranging cycle is short, the pulse intervals between the A-phase signal and the B-phase signal are smaller than those when the ranging cycle is long. In such a case, it is possible to determine an abnormality by shifting the normal range.

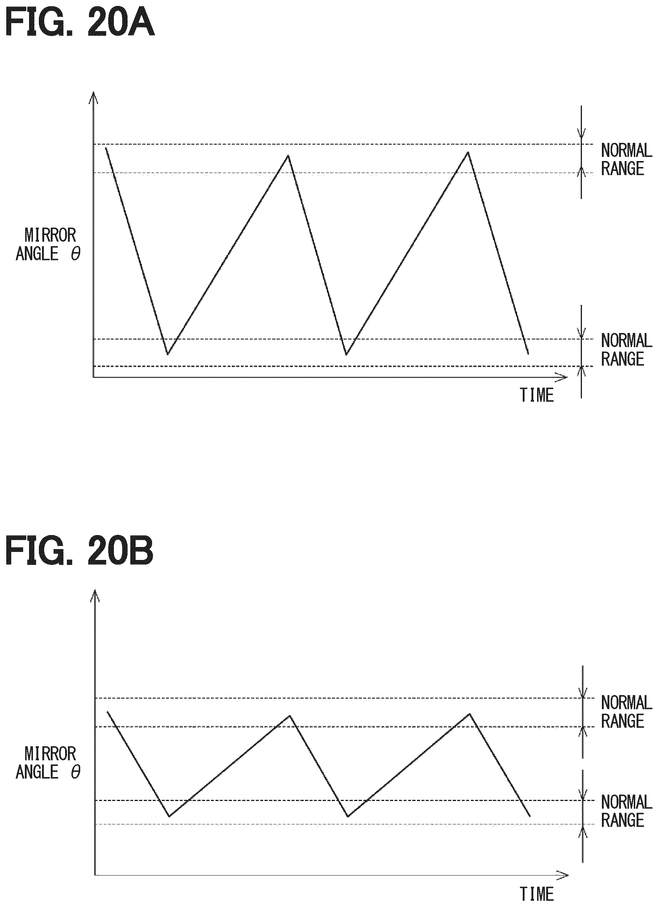

FIG. 20A shows a case where the ranging range is relatively wide, and FIG. 20B shows a case where the ranging range is relatively narrow. When the ranging range is narrow, the amplitude of the mirror angle θ is smaller than that when the ranging range is wide. In such a case, it is possible to determine an abnormality by shifting the normal range.

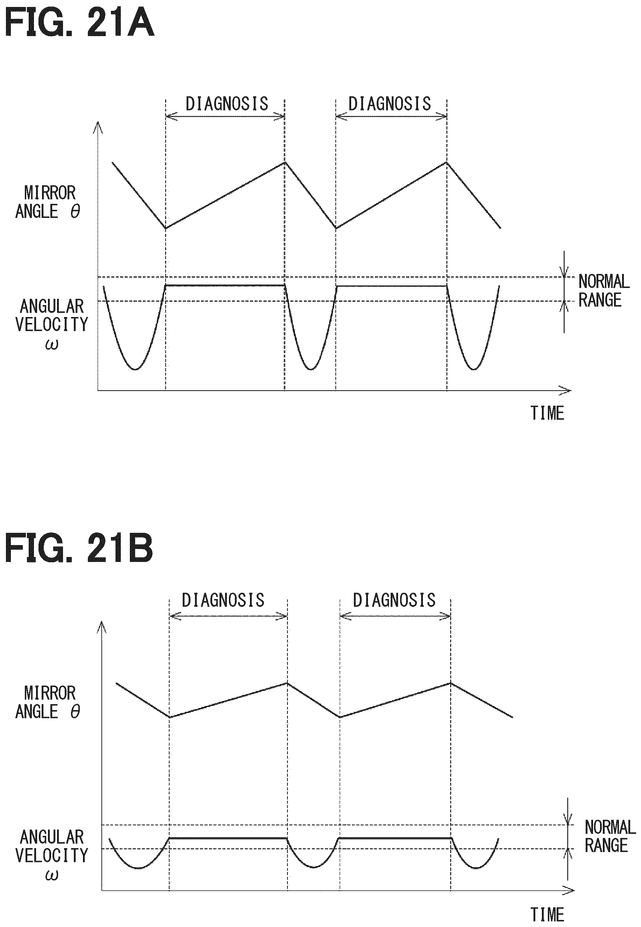

FIG. 21A shows a case where the ranging range is relatively wide, and FIG. 21B shows a case where the ranging range is relatively narrow while the ranging cycles are equal. When the ranging cycle is the same and the ranging range is narrow, the angular velocity ω is small. In such a case, it is possible to determine an abnormality by shifting the normal range.

FIG. 22A shows a case where the ranging range is relatively wide, and FIG. 22B shows a case where the ranging range is relatively narrow while the ranging cycles are equal. As described with reference to FIGS. 21A and 21B, when the ranging cycle is equal and the ranging range is narrow, the angular velocity ω is small. Thus, the pulse intervals between the A-phase signal and the B-phase signal are large. In such a case, it is possible to determine an abnormality by shifting the normal range.

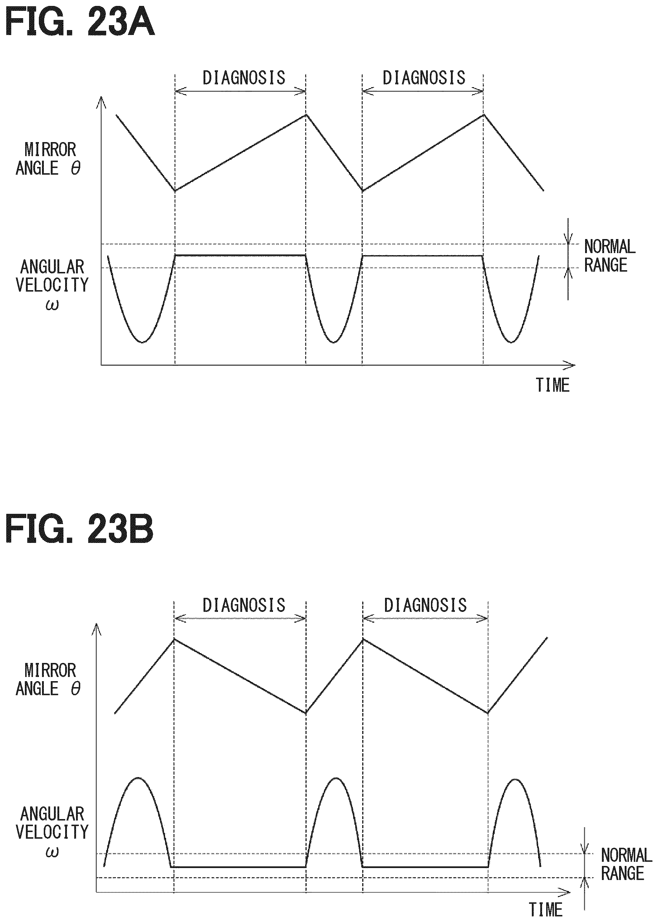

FIG. 23A shows a case where ranging is performed during forward rotation, and FIG. 23B shows a case where ranging is performed during reverse rotation. When ranging is performed during reverse rotation, abnormality diagnosis is performed during reverse rotation, and the angular velocity ω during diagnosis has a negative value. In such a case, it is possible to determine an abnormality by shifting the normal range. If the cycle and amplitude are the same, the sign of the normal range in FIG. 23A may be reversed.

As described above, the ranging device 1 of this embodiment includes the scan unit 20, the encoder 40, and the control unit 50. The scan unit 20 includes the mirror 21 and the oscillation motor 30. The mirror 21 reflects the light beam, which is the transmission wave output from the light emitting unit 10. The oscillation motor 30 drives the mirror 21 to oscillate so that the light beam scans the scanning range. The encoder 40 outputs an angle signal according to the rotation of the mirror 21.

The control unit 50 includes the position calculation unit 51, the drive control unit 53, and the abnormality diagnosis unit 55. The position calculation unit 51 calculates the position of the object that reflects the light beam in the scanning range. The drive control unit 53 controls driving of the oscillation motor 30. The abnormality diagnosis unit 55 performs abnormality diagnosis regarding the operational state of the scan unit 20 based on a signal output by the encoder 40. This makes it possible to appropriately detect an operational abnormality in the scan unit 20 based on a signal from the encoder 40.

The abnormality diagnosis unit 55 determines that there is an oscillation amplitude abnormality based on at least one of the maximum and minimum values of the mirror angle θ, within one cycle of scanning control, falling outside the normal range. The mirror angle θ is calculated based on the angle signal. This makes it possible to properly detect amplitude abnormalities, and to detect a loss of the ranging range due to a lack of amplitude caused by, for example, a failure or an increase in load of the oscillating motor 30.

The abnormality diagnosis unit 55 determines that there is an angular velocity abnormality based on the angular velocity ω of the mirror 21, under a ranging executable condition, falling outside the normal range. The angular velocity ω is calculated by the angle signal. In this embodiment, forward rotation corresponds to "the ranging executable condition" and abnormality diagnosis related to the angular velocity ω is performed during the forward rotation. However, the ranging executable condition may be defined as a range of the rotation excluding a predetermined range before and after reversal of the rotational direction, and the abnormality diagnosis may be performed within this range. In addition, in FIG. 23B, the reverse rotation corresponds to "the ranging executable condition". Similarly, the ranging executable condition may be defined as a range of the rotation excluding a predetermined range before and after the reversal of the rotational direction, and the abnormality diagnosis may be performed within this range. The same applies to abnormality diagnosis of the angle signal. This makes it possible to detect a decrease in ranging accuracy due to an abnormality in angular velocity.

The encoder 40 outputs A-phase signals and B-phase signals, which are multiple pulse signals, as angle signals. The abnormality diagnosis unit 55 determines that there is an angle signal output abnormality based on the edge interval between the A-phase signal and the B-phase signal, under the ranging executable condition, falling outside the normal range. This makes it possible to detect that the calculated mirror angle θ differs from the actual angle due to output abnormality in the encoder 40.

The encoder 40 outputs a Z-phase signal, which is a pulse signal, as a reference signal in addition to angle signals. The abnormality diagnosis unit 55 determines that there is a reference signal abnormality when the number of times the edge of the reference signal is detected within one cycle of scanning control falls outside the normal range. This makes it possible to detect that the reference position of the mirror 21 is not recognized.

In addition, if an abnormality exists in the A-phase signal and B-phase signal, which are angle signals of the encoder 40, or Z-phase signal, which is the reference signal, the oscillation of the mirror 21 is not properly controlled. Thus, diagnosis of abnormalities in the A-phase signal, B-phase signal, and Z-phase signal is included in the concept of "abnormality diagnosis related to the operational state". In the embodiment, the oscillation motor 30 corresponds to an "actuator".

(Other embodiments) In the above embodiments, the mirror is biased back to the reference position by magnetic force. In another embodiment, the mirror may be biased back to the reference position by a resilient member, such as a spring. Furthermore, the configuration of the scan unit and the details of the ranging control may be different from those in the above embodiments.

In the above embodiment, the encoder outputs two-phase signals, an A-phase signal and a B-phase signal, as angle signals. In another embodiment, the encoder may output three-phase or more signals as the angle signals. Additionally, the reference signal may be omitted.

The control unit and the technique according to the present disclosure may be achieved by a dedicated computer provided by constituting a processor and a memory programmed to execute one or more functions embodied by a computer program. Alternatively, the control unit described in the present disclosure and the method thereof may be implemented by a dedicated computer configured as a processor with one or more dedicated hardware logic circuits. Alternatively, the controller and method described in the present disclosure may be implemented using one or more dedicated computers, which include a combination of a processor consisting of one or more hardware logic circuits, and a processor and memory programmed to perform one or more functions. The computer programs may be stored, as instructions to be executed by a computer, in a tangible non-transitory computer-readable medium. As described above, the present disclosure is not limited to the embodiments described above, and can be implemented in various forms without departing from the spirit of the present disclosure.

The present disclosure has been made in accordance with the embodiments. However, the present disclosure is not limited to such embodiments and configurations. The present disclosure also includes various modification examples and modifications within the scope of equivalents. Furthermore, various combination and formation, and other combination and formation including one, more than one or less than one element may be included in the present disclosure.

## Claims

1. A ranging device comprising:
a scan unit (20) including:
a mirror (21) configured to reflect a transmission wave; and
an actuator (30) configured to drive the mirror to oscillate such that the transmission wave scans a scanning range;
an encoder (40) configured to output an angle signal according to a rotation of the mirror; and
a control unit (50) including:
a position calculation unit (51) configured to calculate a position of an object that reflects the transmission wave in the scanning range;
a drive control unit (53) configured to control the actuator; and
an abnormality diagnosis unit (55) configured to perform an abnormality diagnosis regarding an operational state of the scan unit based on a signal output by the encoder.

2. The ranging device according to claim 1, wherein
the abnormality diagnosis unit is configured to determine that there is an oscillation amplitude abnormality based on at least one of a maximum value and a minimum value of a mirror angle, calculated based on the angle signal within one cycle of scanning control, falling outside a normal range.

3. The ranging device according to claim 1, wherein
the abnormality diagnosis unit is configured to determine that there is an angular velocity abnormality based on an angular velocity of the mirror, calculated based on the angle signal under a ranging execution condition, falling outside a normal range.

4. The ranging device according to claim 1, wherein
the encoder is configured to output pulse signals as the angle signal, and
the abnormality diagnosis unit is configured to determine that there is an output abnormality of the angle signal based on an edge interval of the pulse signals, under a ranging execution condition, falling outside a normal range.

5. The ranging device according to claim 1, wherein
the encoder is further configured to output a pulse signal as a reference signal in addition to the angle signal, and
the abnormality diagnosis unit is configured to determine that there is a reference signal abnormality based on an edge detection number of times for the reference signal, within one cycle of scanning control, falling outside a normal range.
